# EUROPEAN PATENT APPLICATION

(11) **EP 4 715 325 A1**
(43) Date of publication of application: **25.03.2026**
(21) Application number: 24201698.8
(22) Date of filing: 20.09.2024
(51) Int. Cl.: G01B 11/27, G01B 9/02098

(54) **OBSERVATION SYSTEM AND METHOD FOR PROVIDING AN ORIENTATION CORRECTION**

(71) Applicant: Leibniz-Institut für Astrophysik Potsdam (AIP), 14482 Potsdam, Brandenburg (DE)
(72) Inventor: Günther, Alan, 14467 Potsdam (DE); Dinkelaker, Aline, 10781 Berlin (DE)
(74) Representative: Heinemeyer, Karsten

(57) **Abstract**

The invention relates to an observation system (100), in particular to a telescope (140), for optically observing an area, in particular for observing the space, comprising a constraining aperture (110), an optical detection unit (120) and an evaluation unit (130). The constraining aperture is arranged to receive light waves (114) from the area. The optical detection unit is arranged and configured to separate the received light waves into a plurality of received light segments (122) and to combine at least two received light segments to a current interferometric image (124) on a detector surface (126) of the optical detection unit and to provide a respective interferometric information signal (128). The evaluation unit is arranged and configured to receive the current interferometric information signal and to compare the current interferometric information signal with an earlier interferometric information signal, wherein upon a detection of a change of a characteristic (132) of the interferometric information signal that exceeds a predefined threshold (134), an orientation correction signal (136) is provided that indicates a required orientation correction of the orientation (116) of the observation system.

## Description

### FIELD OF THE INVENTION

The invention relates to an observation system, in particular a telescope, for optically observing an area, in particular for observing the space. Furthermore, the invention relates to a method for providing an orientation correction during an optical observation of an area, in particular during an observation of the space. Furthermore, the invention relates to a computer program.

### BACKGROUND OF THE INVENTION

Observation systems are well-known in the art, especially within the context of astronomical observations. Usually, satellite telescopes or stationary stellar telescopes are used to provide images of the space and thereby of distant static objects.

While the optical structure of telescopes has remained similar during the last decades, the quality of astronomic images has increased due to larger sizes of telescopes and less influence of atmospheric noise while using one or more satellite telescopes. In particular the use of at least two satellite telescopes for providing high resolution images of the space has shown that the position and the orientation of telescopes have to be controlled very precisely.

It is known that angular resolution between two telescopes has to be high enough to ensure that the angular deviation a holds the following relation: tan *α* < *λ*/2*B* , with B being the baseline, i.e. the distance between both telescopes, and λ being the center wavelength of the observation. In view of this relation, two satellite telescopes with a distance of 100 m are leading to a necessary angular resolution in the region of milliarcseconds.

It is well known to reach such angular resolutions of the observations by detecting so called 'guiding stars' and compare a well-known predefined intensity distribution and/or point spread function with a current image in order to correct an orientation of the system if deviations from the predefined intensity distribution and/or point spread function are detected. An exemplary publication that describes this state of the art method can be found in "The Fine Guidance System of the PLATO Mission" (Denis Grießbach, Ulrike Witteck, and Carsten Paproth, 11852:118523H, 2021; https://doi.org/10.1117/12.2599604).

It is an object of the invention to provide an improved observation system, in particular to provide an observation system that allows a very precise control of the angular orientation.

### SUMMARY OF THE INVENTION

According to a first aspect of the invention, an observation system, in particular a telescope, for optically observing an area, preferably an area that is providing coherent light waves, in particular for observing the space, is provided. The observation system comprising
- a constraining aperture, which is arranged to receive light waves from the area and which establishes a position and an orientation of the observation system,
- an optical detection unit, which is arranged and configured to separate the received light waves into a plurality of received light segments, and to combine at least two received light segments to a current interferometric image on a detector surface of the optical detection unit and to provide a respective interferometric information signal,
- an evaluation unit, which is arranged and configured to receive the current interferometric information signal and to compare the current interferometric information signal with an earlier interferometric information signal, wherein upon a detection of a change of a characteristic of the interferometric information signal that exceeds a predefined threshold, an orientation correction signal is provided that indicates a required orientation correction of the orientation of the observation system.

The observation system according to the first aspect of the invention allows a very precise control of the orientation of the observation system by using the interferometric image. Phase differences that are introduced by a tilting of the observation system would be directly detected by the respective influence of such a phase difference on the interferometric image.

Furthermore, the observation system according to the first aspect of the invention allows an angular correction over a long period of time since no manual interaction is needed for providing the orientation correction signal.

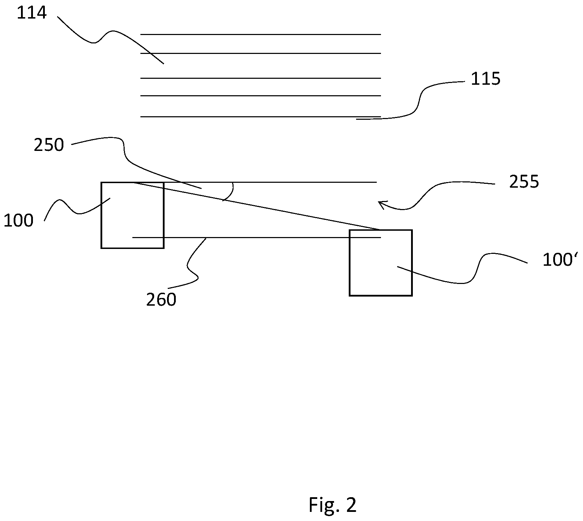

Using interferometric images advantageously allows a very precise detection of changes in the orientation. After an initial control of a precise orientation at the start of the observation process, the observation system with its optical detection unit and its evaluation unit allows the recognition of changes of the orientation on a scale of milliarcseconds and lower. Details concerning the precision are explained in the detailed description with respect to Fig. 2.

The constraining aperture of the observation system is usually arranged at a housing of the observation system that surrounds further parts or all parts of the observation system. Therefore, a change of the constraining aperture preferably also leads to a change of the orientation of the optical detection unit.

It is obvious to somebody skilled in the art that the invention is independent from a specific optical structure of the observation system. In particular, the observation system can be formed by a reflecting telescope, by a refracting telescope or the like. The optical detection unit can also be formed in various ways but is preferably formed by optical means that guide the light waves within the respective received light segments to the detector surface.

The received light segments can be provided by predefined segments of an optical focus plan and/or by a pupil mask within a resulting light beam. In that sense, light segments are different spatial regions within a cross-section of a light beam within the optical detection unit. Thus, the received light segments represent the surface of an image plane within the optical detection unit, such as for example the surface of the telescope mirror, if a telescope is used for the observation system. Changes of the angle to the observed area, such as to a distant light source, lead to a path length difference between for example a left and a right part of the constraining aperture that causes a phase shift in the light segments that represent these parts of the image plane. When the two beams formed by the two light segments are overlapped, the resulting interference pattern will change and lead to the respective orientation correction signal.

The units of the observation system can be provided in one common housing and or at least partially in different housings.

It is clear to somebody skilled in the art that the combination of the two received light segments to an interferometric image requires coherent waves within these received light segments. In general, the idea of interferometrically combining the light of different parts of telescope segments is known as 'pupil remapping' in a different context. An exemplary optical implementation of such a combination can be found in the publication "First Stellar Photons for an Integrated Optics Discrete Beam Combiner at the William Herschel Telescope" (Nayak Abani Shankar et al., Appl. Opt. 60, no.19 (July 2021): D129-D142).

The predefined threshold is preferably empirically chosen in order to ensure an actual change of the orientation that has to be detected.

Although the invention is mainly described in the context of space observations, it is clear that the observation system can also be used for the observation of other areas such as a landscape or other geological characteristics.

The orientation correction signal can be used to automatically correct the orientation of the observation system. Alternatively or additionally, the orientation correction signal informs an external device and/or the user of the observation system that the orientation has been changed.

The area, in particular the distant area, preferably provides light waves that are coherent with respect to the diameter of the constraining aperture. The distant area is preferably static in the sense that it does not change remarkably on short time scales, which means on time scales that are typically relevant for optical observations, such as during a few minutes and/or hours.

The area is preferably containing a spatially coherent light source.

In the following, embodiments of the observation system according to the first aspect of the invention will be described.

In a preferred embodiment, the observation system is further comprising an orientation control unit, which is arranged and configured to receive the orientation correction signal and to automatically adapt the orientation of the observation system accordingly. In this embodiment, the orientation control unit allows an easy and automatic use of the observation system wherein manual input can be avoided. Preferably, the orientation control unit communicates cable-based with the evaluation unit and is electrically connected to mechanical means that are configured to adapt the orientation of the observation system. In an alternative variant of this embodiment, the communication between evaluation unit and orientation control unit is wireless. In a further variant, the orientation control system controls the orientation of the observation system by use of a piezo element, thrusters, inertia wheels or the like.

Preferably, the orientation correction signal indicates the amount of angle, i.e. the precise change of orientation, that has to be corrected. Thereby, the orientation control unit of the aforementioned embodiment is configured to change the orientation according to the information within the orientation correction signal.

In a preferred embodiment of the observation system, the optical detection unit is configured to provide the plurality of the received light segments such that at least two of the combined received light segments have not been adjacent to each other within the received light waves. The combination of non-adjacent received light segments shows a larger phase difference and therefore leads to a better resolution of changes in the orientation. In an advantageous variant of this embodiment, the combined light segments are on diametrically opposed parts of the received light waves. In this variant, there are particularly large changes in the phase of the respective received light segments compared to each other which lead to a large influence of a change in orientation on the interferometric image. In a further variant of this embodiment, at least three different received light segments are combined to the interferometric image and thereby lead to more characteristic regions within this detected interferometric image compared to just two different received light segments. More characteristic regions can advantageously lead to a particularly reliable detection of a change in orientation and therefore to a reliable orientation correction signal.

In a preferred embodiment, the detected characteristic of the interferometric information signal indicates a position of at least one local intensity maximum within the interferometric image. Such local intensity maxima can be reliably detected and therefore form an advantageous characteristic to detect. In a variant of this embodiment, further characteristics of the interferometric image are detected, such as the intensity of the local intensity maximum, a number of local intensity maxima and/or a difference between two intensities within the interferometric image. Preferably, such characteristics are provided by the interferometric information signal.

In an advantageous embodiment of the observation system, the plurality of received light segments is provided by a pupil mask with a plurality of openings within a beam path of the optical detection unit. Such a pupil mask gives a robust and reliable definition of the received light segments that have to be combined. The pupil mask provides at least two openings for providing two received light segments. Preferably, the pupil mask provides at least three openings, such as four openings to define respective received light segments.

In a preferred embodiment, the detector surface of the optical detection unit is a surface of a fringe detector. Such a fringe detector is well known for similar optical applications. The fringe detector is typically formed by an optical CCD- and/or a CMOS-sensor as it is known in the art. Therefore, such a fringe detector is easy to provide and can be reliably used even for automated applications of the observation system according to the first aspect of the invention. Alternatively, other well-known optical detectors can be used to detect the interferometric image as well.

In a further embodiment, the optical detection unit is configured to provide a broadband detection of the current interferometric image. By providing a broadband detection via the detection surface, more characteristics of the interferometric image can be detected and evaluated. In particular, the interferometric image can be evaluated for different wavelengths which show different intensity distributions.

In a further advantageous embodiment of the observation system, the optical detection unit is configured to provide a first and a second current interferometric image for both respective dimensions of the observed area, and wherein the evaluation unit is configured to provide the orientation correction signal depending on the first and the second interferometric image. By analysing each dimension of the observed area, the orientation of the angular change can be precisely determined. Thus, in this embodiment, a vertical displacement and a horizontal displacement can be determined separately to calculate the orientation of the angular change that has to be corrected.

In a preferred embodiment, the optical detection unit is further arranged and configured to provide an optical signal that indicates the received light waves for further analysis to an external analysis unit. The external analysis unit might allow scientific applications of the optical signal, such as a detailed study of the image of the area that is indicated by the received light waves. Thus, the provided optical signal allows the main application of the observation system, which is supported by the angular correction provided by the orientation correction signal according to the first aspect of the invention. In a preferred variant of this embodiment, the optical signal is provided by using a dielectric/dichroic mirror for the received light waves. In this variant, the same light beam that is used for providing the interferometric image is also used for further applications with the optical signal. Thereby, light waves that show a stable orientation also show a stable behaviour of their phases within the received light beam and can be therefore reliably used for further studies. In this variant, the same beam of light can be advantageously used for different applications.

The external analysis unit can be in the same housing as some or all components of the observation system. The external analysis unit is external in the sense that its function is independent from the invention that is provided with this application.

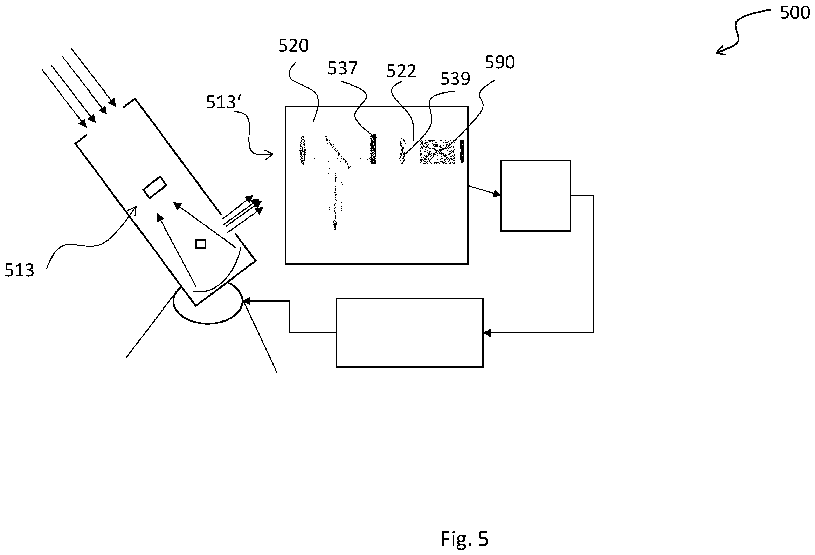

In a further embodiment, the optical detection unit comprises a photonic beam combiner in order to combine the at least two received light segments. A possible arrangement of such an optical detection unit is shown in Fig. 5. The optical detection unit of this embodiment can be advantageously provided in small dimensions and therefore does not need much room in a satellite. Detailed structures of photonic beam combiner are well-known in the art of photonic components, so that there is no detailed explanation of this structure in the following.

In a particularly preferred embodiment, the observation system comprises a telescope, in particular a satellite telescope, or is formed by a telescope, in particular by a satellite telescope. Telescopes need a very precise control of their orientation in order to provide a high spatial resolution of the detected images. While it is well known for satellite telescopes how a position relative to another satellite can be held constant, changes in the angular orientation with respect to the observed target remain difficult to detect with the needed precision. Therefore, the presented observation system with its orientation correction signal can seriously improve known observation systems within telescopes. The orientation correction signal can provide an indicator that the orientation has to be changed manually and/or that no further high-resolution images can be provided until a correction has been executed. Alternatively, the orientation correction signal can be used for automatically adjust the orientation, as for example provided in the embodiment with the orientation control unit as disclosed above.

In an advantageous embodiment, the evaluation unit is configured to detect the change of a characteristic by using a neural network. The neural network is provided with other interferometric images and the corresponding changes of the characteristic and thereby learns to detect such changes accordingly based on that data. Using the neural network advantageously allows a reliable analysis of the interferometric image even if a structure of the interferometric image is very complex.

According to a second aspect of the invention, a method for providing an orientation correction during an optical observation of an area, preferably an area that is providing coherent light waves, in particular during an observation of the space, is provided. The method comprising the steps of
- reception of light waves from the area;
- separation of the received light waves into a plurality of received light segments;
- combination of at least two received light segments to a current interferometric image on a detector surface;
- provision of an interferometric information signal that indicates the detected current interferometric image;
- comparison of the current interferometric information signal with an earlier interferometric information signal; and
- provision of an orientation correction signal that indicates a required orientation correction of the orientation of the observation upon a detection of a change of a characteristic of the interferometric information signal that exceeds a predefined threshold.

The method according to the second aspect of the invention is executed by the observation system according to the first aspect of the invention and therefore shares the same advantages as the observation system.

In particular, the method also allows a precise detection of a change in orientation of the optical observation, such as the observation with the observation system according to the first aspect of the invention. Furthermore, the method can be carried out automatically or semi-automatically and is easy to provide in well-known observation systems.

The method allows a fast repetition and therefore an ongoing monitoring of changes within the interferometric image, i.e. of changes of the angular orientation of the observation.

Furthermore, the method relies on well-known optical techniques and well-known technical equipment so that a reliable application can be provided without complex new developments of analysis tools.

In the following, embodiments of the method according to the second aspect of the invention will be described.

In a preferred embodiment, the method is further comprising the final step of receiving the orientation correction signal and of automatically adapting the orientation of the observation accordingly. In this embodiment, the method can lead to an automatic correction of the orientation of the current observation. In this embodiment, a particularly fast correction of the angular orientation of the observation is possible.

Preferably, the method according to the second aspect of the invention is executed in less than 60 second, in particular less than 30 seconds, such as less than 15 seconds.

In a further preferred embodiment, the method further comprises the step of providing an optical signal that indicates the received light waves to an external analysis unit. In this embedment, the main application of the method, i.e. the study of received light waves, such as during a scientific study of the area, can be carried out with the same received light waves that are used for providing the orientation correction signal.

According to a third aspect of the invention, a computer program for operating a system comprising program code means for causing a computer to carry out a method according to the second aspect of the invention is provided.

The computer which comprises the computer program may for instance form an integrated part of the observation system according to the first aspect of the invention and be implemented as a microcontroller or microprocessor. In another embodiment, the computer forms an integrated part of a control unit that is spatially separated from the further components of the system and configured to control the evaluation unit and/or a part of the optical detection unit.

It shall be understood that the observation system, in particular the telescope, for optically observing an area, in particular for observing the space, according to the first aspect of the invention, the method for providing an orientation correction during an optical observation of an area, in particular during an observation of the space, according to the second aspect of the invention, and the computer program for operating a system according to the third aspect of the invention have similar or identical embodiments.

These and other aspects of the invention will be apparent from and elucidated with reference to the embodiments described hereinafter.

### BRIEF DESCRIPTION OF THE DRAWINGS

In the following drawings:
Fig. 1 shows a first embodiment of an observation system according to a first aspect of the invention;
Fig. 2 shows a sketch of an embodiment of the observation system according to the first aspect of the invention in order to explain changes of orientation and position that have to be corrected;
Fig. 3 shows a second embodiment of the observation system according to the first aspect of the invention;
Fig. 4 shows a third embodiment of the observation system according to the first aspect of the invention;
Fig. 5 shows a fourth embodiment of the observation system according to the first aspect of the invention; and
Fig. 6 shows an embodiment of a method according to a second aspect of the invention.

### DETAILED DESCRIPTION OF EMBODIMENTS

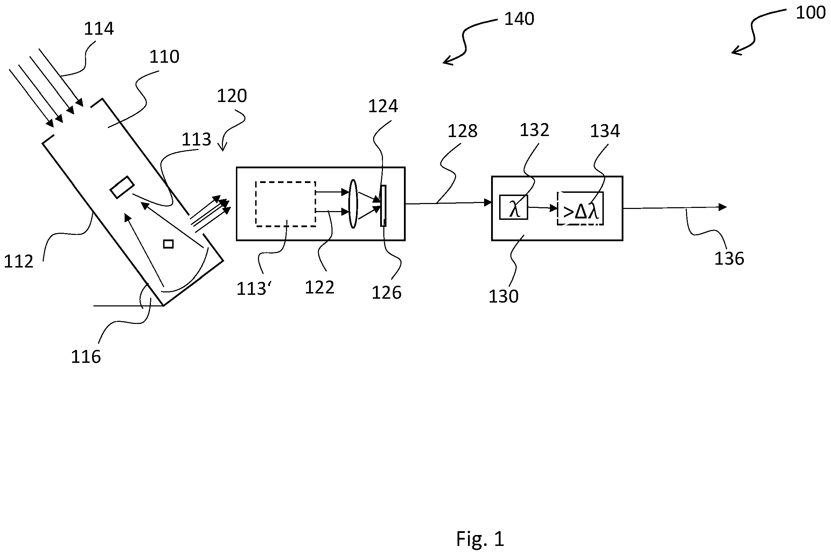

Fig. 1 shows a first embodiment of an observation system 100 according to a first aspect of the invention.

The observation system 100, which is in the shown embodiment a telescope, is configured for optically observing an area, like a distant static area, in particular for observing the space. For this reason, a constraining aperture 110 of the observation system 100 is oriented towards the area of space that should be observed.

The constraining aperture 110 is an opening within a housing 112 that also surrounds optical means 113 of an optical detection unit 120 of the observation system 100. The constraining aperture 110 is arranged to receive light waves 114 from the area. The orientation and the position of the constraining aperture 110 establishes the position and the orientation 116 of the observation system 100. A change of the orientation 116 preferably also changes the orientation of the optical means 113 within the housing 112 that forms the constraining aperture 110.

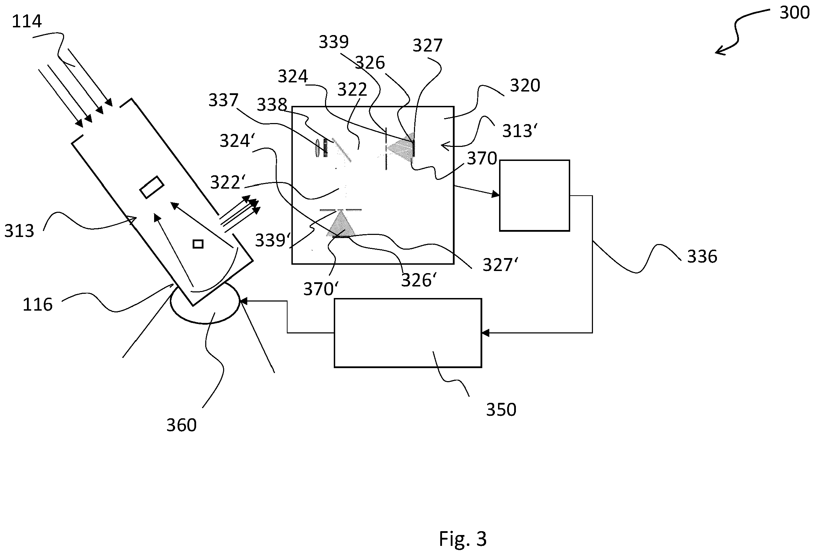

The optical detection unit 120 is arranged and configured to separate the received light waves 114 into a plurality of received light segments 122. This separation can be provided at any position provided by the optical means 113 within the housing 112. The separated light segments 122 can for example be separated by different optical fibres and/or by a pupil mask with a predefined number of openings which represent each separated light segment 122. At the end of the optical path of the respective light beams, at least two received light segments 122 are combined by the optical detection unit 120 to a current interferometric image 124 on a detector surface 126 of the optical detection unit 120. The detector surface 126 can be formed by a surface of any known optical detector type. As an output, the optical detection unit 120 is configured to provide a respective interferometric information signal 128 that indicates the current interferometric image 124. Thus, the optical detection unit is configured to receive an optical signal provided by the received light waves 114 and to provide the interferometric information signal 128 preferably as an electronic signal. The structure of the optical means within the housing 112 and/or within a further housing of the optical detection unit 120 can differ for different embodiments as it can be seen in Figs 3, 4 and 5. Therefore, the precise embodiment of the optical means 113 and further optical means 113' is not shown in Fig. 1 but illustrated by the dashed box in the optical detection unit 120.

An evaluation unit 130 of the observation system 100 is arranged and configured to receive the current interferometric information signal 128 and to compare the current interferometric information signal 128 with an earlier interferometric information signal. The earlier interferometric information signal is preferably stored in a not shown storage module of the evaluation unit 130 for a predefined period of time. Additionally, in a variant of this embodiment, the current interferometric information signal 128 is compared with a plurality of earlier interferometric information signals in order to provide a reliable comparison between these signals. Upon a detection of a change of a characteristic 132 of the interferometric information signal 128 that exceeds a predefined threshold 134, an orientation correction signal 136 is provided that indicates a required orientation correction of the orientation 116 of the observation system 100. Preferably, the orientation correction signal also provides an information about the way the orientation 116 should be corrected in order to achieve the initially desired orientation again.

The detected characteristic 132 of the interferometric information signal 128 in this embodiment indicates a position of a local intensity maximum within the interferometric image 124. Alternatively and/or additionally, other characteristics can be used such as an intensity of a local intensity maximum within the interferometric image, a difference of intensities and/or a number of local intensity maxima or the like. The characteristic just has to be suitably for indicating a change within the interferometric image that goes beyond measurement errors or similar short-term influences in order to indicate an unintentional change of the orientation 116 of the observation system 100.

The optical detection unit 120 and in particular the optical means 113 and/or the further optical means 113' are configured to provide the plurality of the received light segments 122 such that at least two of the combined received light segments 122 have not been adjacent to each other within the received light waves 114. Received light segments that are distant to another, such as light segments that are formed by light waves 114 from different edges of the constraining aperture 110, show a particular large phase different to each other in case of a change of the orientation 116 of the observation system 100. Therefore, combining such received light segments for providing the interferometric image 124 allows a particularly reliable detection of a change of the orientation 116 in view of the larger change of the respective phase within the light segments 122. Such a larger phase change contributes to a larger change of the characteristic 132 detected by the evaluation unit 130.

The observation system 100 according to the first aspect of the invention preferably comprises a telescope 140, in particular a satellite telescope, or is formed by a telescope, in particular by a satellite telescope. For applications where the space is observed by a telescope 140, the orientation correction signal 136 is particularly advantageous. Small changes of the orientation 116 can lead to a large loss of quality of the resulting image. Therefore, it is important to know if and when the orientation 116 of the telescope 140 has changed. In the embodiment shown in Fig. 1, the orientation correction signal 136 is provided to a further not shown unit in order to inform a user about the change of the orientation 116. In other embodiments, as for example shown in Figs 3, 4 and 5, the orientation correction signal can further induce the spatial location of the angle of orientation that has to be changed in order to reach the desired initial orientation.

Fig. 2 shows a sketch of an embodiment of the observation system 100 according to the first aspect of the invention in order to explain changes of orientation 250 and position 255 that have to be corrected.

Fig. 2 shows an example of two observation system 100, 100' that are for reasons of simplicity identical to the observation system 100 shown in Fig. 1. The shown wavefronts 115 of the received light waves 114 from the observed object, such as a star, illustrate the problem that occurs, if the change of orientation 250 and/or the change of position 255 is present.

Both changes 250 and 255 lead to a situation, where different phases of the received light waves are detected. While the spatial position can be reliably stabilized even for systems of two or more satellite telescopes, the changes of the orientation 250 are usually harder to detect so that the presented observation system 100 according to the first aspect of the invention is particularly advantageous.

Even if the changes 250, 255 are not corrected, it can be advantageous to know these changes in order to process the resulting data accordingly.

Trigonometries show that a tilt of the observation system 100 of 1 milliarcsecond would lead for a constraining aperture 110 of about 50 cm to a shift between left and right side of the constraining aperture 110 of 2,4 nm for a central wavelength of 500 nm. Such shifts can be easily detected by the provided technique of combining those received light segments to form the interferometric image. Therefore, an angular resolution of less than 1 milliarcsecond becomes possible for the provided observation system 100.

According to the relation tan *α* < *λ*/2*B* that has been given in the introduction above, a baseline 260 of 1 m leads for a central wavelength of 1,5 µm to a required angular resolution of 160 milliarc seconds, while a baseline of 140 m leads to a respective required angular resolution of 1,1 milliarcseconds. These estimates show that the provided observation system 100 according to the first aspect of the invention can reliably provide the required angular resolution even for systems of at least two satellite telescopes.

Fig. 3 shows a second embodiment of the observation system 300 according to the first aspect of the invention.

The observation system 300 is similar to the observation system 100 shown in Fig. 1, but in contrast to the observation system 100, the observation system 300 is further comprising an orientation control unit 350. The orientation control unit 350 is arranged and configured to receive the orientation correction signal 336 and to automatically adapt the orientation 116 of the observation system 300 accordingly. In order to adapt the orientation 116 accordingly, mechanical means 360 are used as they are in general well-known for remotely controlling the orientation of telescopes, such as satellite telescopes. Therefore, the mechanical means 360 are not explained in detail in the following.

As shown in Fig. 3, two fringe detectors 327, 327' are provided to form two respective detector surfaces 326, 326'. With both detector surfaces 326, 326', a first and a second current interferometric image 324, 324' can be provided in order to have a respective interferometric image for each dimension of the observed area. The evaluation unit 330 is further configured to provide the orientation correction signal 336 depending on the first and the second interferometric image 324, 324'. Thereby a horizontal displacement and a vertical displacement can be detected separately. This leads to a very precise information about the change of orientation of the observation system 300.

Furthermore, in contrast to Fig. 1, the optical detection unit 320 is configured to provide a broadband detection of the current interferometric image 324, 324'. Such a broadband detection allows an evaluation of more wavelength dependent characteristics and can therefore lead to an improved angular resolution of the resulting system.

The shown optical means 313, 313' are just exemplary and show a filter 337 and a beam splitter 338 for providing the two different interferometric images 324, 324'. In the embodiment shown in Fig. 3, the at least two received light beams 322, 322' are provided by a respective pupil mask 339, 339' and combined by an overlapping prism 370, 370' and/or other optical means in order to provide the respective current interferometric image 324, 324'.

The used pupil mask 339, 339' is formed by a plane with a number of openings, such as 2, 3 or 4 openings, through which a part of a light beam, which forms a light segment afterwards, can pass. Such pupil masks can be used at any point of the optical detection unit 320 within the provided light beam that is formed by the received light waves 114.

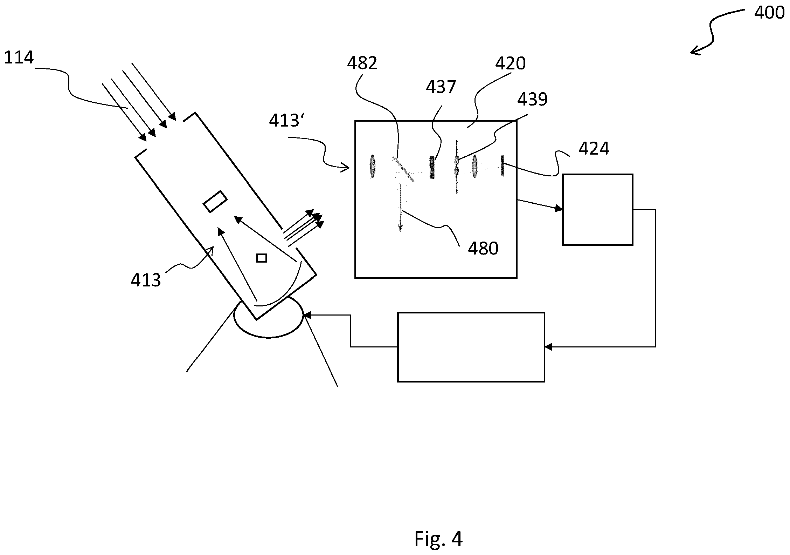

Fig. 4 shows a third embodiment of the observation system 400 according to the first aspect of the invention.

The observation system 400 is similar to the observation system 300 that is shown in Fig. 3. But in contrast to the observation system 300, the optical detection unit 420 of the observation system 400 is further arranged and configured to provide an optical signal 480 that indicates the received light waves 114 for further analysis to an external analysis unit that is not shown. The external analysis unit allows further scientific research of the received light waves 114 and thereby of the area, in particular of the space. Therefore, the observation system 400 can allow a parallel analysis of the received light waves 114 and of possible changes in the orientation that might occurred.

In order to provide the optical signal 480, a dielectric/dichroic mirror 482 is used for the received light waves 114.

Furthermore, the optical means 413, 413' of this embodiment comprise a filter 437 and a pupil mask 439 in order to provide the interferometric image 424.

Fig. 5 shows a fourth embodiment of the observation system 500 according to the first aspect of the invention.

The observation system 500 is similar to the observation system 400 that is shown in Fig. 4. But in contrast to the observation system 400, the optical detection unit 520 comprises a photonic beam combiner 590 in order to combine the at least two received light segments 522. In other embodiments, the received light segments are combined by a respective lens system. Using the photonic beam combiner advantageously allows a very precise definition of the light segments and in particular a very precise orientation of the light segments that have to be combined, for example by using light fibres.

The further optical means 513, 513' of this embodiment comprise a filter 537 and a pupil mask 539 in order to provide the received light segments that are afterwards combined by the photonic beam combiner 590.

It is clear to somebody skilled in the art, that the structure of optical means shown in the depicted embodiments is just schematically depicted and is just exemplary and can be provided in various different ways for creating the observation system according to the first aspect of the invention, as long as at least two received light segments are combined in order to provide the interferometric image.

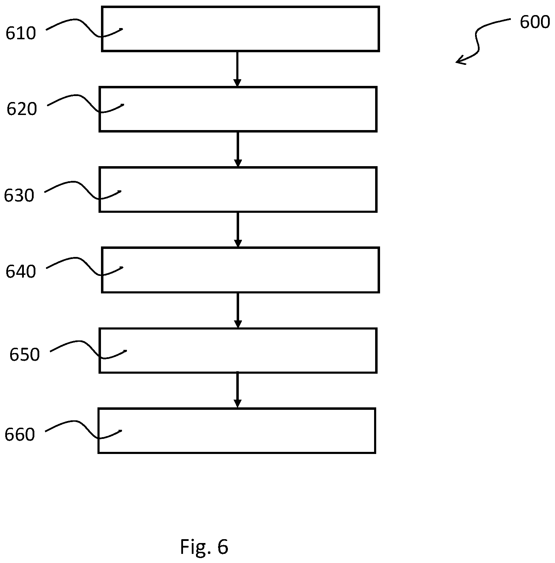

Fig. 6 shows an embodiment of a method 600 according to a second aspect of the invention.

The method 600 is configured to provide an orientation correction during an optical observation of an area, in particular during an observation of the space. The method 600 according to the second aspect of the invention therefore comprises the steps as given in the following.

A first step 610 comprises the reception of light waves from the area.

A following step 620 comprises a separation of the received light waves into a plurality of received light segments.

A next step 630 comprises a combination of at least two received light segments to a current interferometric image on a detector surface.

A further step 640 comprises a provision of an interferometric information signal that indicates the detected current interferometric image.

A following step 650 comprises a comparison of the current interferometric information signal with an earlier interferometric information signal.

A final step 660 comprises a provision of an orientation correction signal that indicates a required orientation correction of the orientation of the observation upon a detection of a change of a characteristic of the interferometric information signal that exceeds a predefined threshold.

The steps 610 to 660 of the method 600 are preferably executed in the given order. The time period between the reception of light waves in step 610 and the provision of the orientation correction signal according to step 660 lasts preferably less than 60 seconds, in particular less than 30 seconds, such as less than 15 seconds.

In a preferred variant of the method 600, this method 600 is further comprising the final step of receiving the orientation correction signal and of automatically adapting the orientation of the observation accordingly. In this variant, the complete method can be executed automatically.

In a further preferred variant of the method 600, the method 600 includes a further step of providing an optical signal that can be used by an external device, such as an external analysis unit. In this variant, the correction of a change in orientation and the analysis of the received light waves can be advantageously executed in parallel.

While the present invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure and the appended claims. In particular the invention is not restricted to its use within telescopes and/or satellite telescopes.

In the claims, the word "comprising" does not exclude other elements or steps, and the indefinite article "a" or "an" does not exclude a plurality.

A single step or other units may fulfill the functions of several items recited in the claims. The mere fact that certain measures are recited in mutually different dependent claims does not indicate that a combination of these measures cannot be used to advantage.

Any reference signs in the claims should not be constructed as limiting the scope.

### LIST OF REFERENCE SIGNS

- 100, 100', 300, 400, 500: observation system
- 110: constraining aperture
- 112: housing
- 113, 113', 313, 313', 413 413', 513, 513': optical means
- 114: received light waves
- 115: wave front
- 116: orientation
- 120, 320, 420, 520: optical detection unit
- 122, 322, 322', 522: received light segments
- 124, 324, 324', 424: interferometric image
- 126, 326, 326': detector surface
- 128: interferometric information signal
- 130: evaluation unit
- 132: parameter
- 134: predefined threshold
- 136, 336: orientation correction signal
- 140: telescope
- 250: change of orientation
- 255: change of position
- 260: baseline
- 327, 327': fringe detector
- 337, 437, 537: filter
- 338: beam splitter
- 339, 339', 439, 539: pupil mask
- 350: orientation control unit
- 360: mechanical means
- 370, 370': overlapping prism
- 480: optical signal
- 482: dielectric/dichroic mirror
- 590: photonic beam combiner
- 600: method
- 610, 620, 630, 640, 650, 660: method steps

## Claims

1. An observation system (100), in particular a telescope (140), for optically observing an area, in particular for observing the space, comprising
- a constraining aperture (110), which is arranged to receive light waves (114) from the area and which establishes a position and an orientation (116) of the observation system (100),
- an optical detection unit (120), which is arranged and configured to separate the received light waves (114) into a plurality of received light segments (122), and to combine at least two received light segments (122) to a current interferometric image (124) on a detector surface (126) of the optical detection unit (120) and to provide a respective interferometric information signal (128),
- an evaluation unit (130), which is arranged and configured to receive the current interferometric information signal (128) and to compare the current interferometric information signal (128) with an earlier interferometric information signal, wherein upon a detection of a change of a characteristic (132) of the interferometric information signal (128) that exceeds a predefined threshold (134), an orientation correction signal (136) is provided that indicates a required orientation correction of the orientation (116) of the observation system (100).

2. The observation system (100) according to claim 1, further comprising an orientation control unit (350), which is arranged and configured to receive the orientation correction signal (136) and to automatically adapt the orientation (116) of the observation system (100) accordingly.

3. The observation system (100) according to at least one of the preceding claims, wherein the optical detection unit (120) is configured to provide the plurality of the received light segments (122) such that at least two of the combined received light segments (122) have not been adjacent to each other within the received light waves (114).

4. The observation system (100) according to at least one of the preceding claims, wherein the detected characteristic (132) of the interferometric information signal (128) indicates a position of a local intensity maximum within the interferometric image (124).

5. The observation system (100) according to at least one of the preceding claims, wherein the plurality of received light segments (122) is provided by a pupil mask (339) with a plurality of openings within a beam path of the optical detection unit (120).

6. The observation system (100) according to at least one of the preceding claims, wherein the detector surface (126) of the optical detection unit is a surface of a fringe detector (327).

7. The observation system (100) according to at least one of the preceding claims, wherein the optical detection unit (120) is configured to provide a broadband detection of the current interferometric image (124).

8. The observation system (100) according to at least one of the preceding claims, wherein the optical detection unit (120) is configured to provide a first and a second current interferometric image (324, 324') for both respective dimensions of the observed area, and wherein the evaluation unit (130) is configured to provide the orientation correction signal (136) depending on the first and the second interferometric image (324, 324').

9. The observation system (100) according to at least one of the preceding claims, wherein the optical detection unit (120) is further arranged and configured to provide an optical signal (480) that indicates the received light waves (114) for further analysis to an external analysis unit.

10. The observation system (100) according to claim 9, wherein the optical signal (480) is provided by using a dielectric or dichroic mirror (482) for the received light waves (114).

11. The observation system (100) according to at least one of the preceding claims, wherein the optical detection unit (120) comprises a photonic beam combiner (590) in order to combine the at least two received light segments (122).

12. The observation system (100) according to at least one of the preceding claims, wherein the observation system (100) comprises a telescope (140), in particular a satellite telescope, or is formed by a telescope (140), in particular by a satellite telescope.

13. A method (600) for providing an orientation correction during an optical observation of an area, in particular during an observation of the space, comprising the steps of
- reception of light waves (114) from the area;
- separation of the received light waves (114) into a plurality of received light segments (122);
- combination of at least two received light segments (122) to a current interferometric image (124) on a detector surface (126);
- provision of an interferometric information signal (128) that indicates the detected current interferometric image (124);
- comparison of the current interferometric information signal (128) with an earlier interferometric information signal; and
- provision of an orientation correction signal (136) that indicates a required orientation correction of the orientation (116) of the observation upon a detection of a change of a characteristic (132) of the interferometric information signal (128) that exceeds a predefined threshold (134).

14. The method (600) according to claim 13, further comprising the step of receiving the orientation correction signal (136) and of automatically adapting the orientation (116) of the observation accordingly.

15. A computer program for operating a system comprising program code means for causing a computer to carry out a method (600) according to claim 13 or 14.
